# FASCICULE DE BREVET EUROPEEN

(11) **EP 1 529 472 B1**
(45) Date de publication et mention de la délivrance du brevet: **24.01.2007**
(21) Numéro de dépôt: 04356163.8
(22) Date de dépôt: 08.10.2004
(51) Int. Cl.: A47J 43/07, A47J 43/06

(54) **Appareil électroménager de préparation culinaire comportant un accessoire accouplé de manière amovible sur un boîtier**
Elektrisches Haushaltsgerät zur Nahrungszubereitung mit einer lösbar an einem Gehäuse gekoppelten Zusatzvorrichtung
Electric household appliance for food processing comprising an accessory removably coupled to a housing

(30) Priorité: 04.11.2003 FR 0312915
(43) Date de publication de la demande: 11.05.2005
(73) Titulaire: SEB S.A., 69130 Ecully (FR)
(72) Inventeur: Lecerf, Joel, 50190 Periers (FR)
(74) Mandataire: Kiehl, Hubert

(56) Documents cités:
- EP-A- 0 111 300
- WO-A-00/48498
- DE-B- 1 165 819
- GB-A- 741 405

## Description

La présente invention concerne le domaine technique général des appareils électroménagers de préparation culinaire. La présente invention concerne plus particulièrement les appareils comportant un accessoire accouplé de manière amovible sur un boîtier, le boîtier et l'accessoire comportant chacun un manchon d'assemblage muni d'un filetage permettant l'accouplement par vissage de l'accessoire sur le boîtier.

Il est connu, du document EP 0 111 300, un appareil électroménager équipé d'un accessoire batteur qui est monté de manière amovible sur un boîtier de mixeur, l'accessoire et le boîtier comportant chacun un manchon d'assemblage muni d'un filetage permettant l'accouplement par vissage de l'un sur l'autre. Un tel appareil électroménager est également muni d'un verrou immobilisant l'accessoire dans une position déterminée par rapport au boîtier, le verrou comportant un ergot monté mobile sur l'un des manchons venant en prise sur un cran ménagé sur l'autre manchon.

Un tel verrou présente cependant l'inconvénient d'immobiliser l'accessoire dans une position déterminée qui ne peut, pour des questions de tolérances de fabrication, correspondre à la position de vissage pour laquelle le corps de l'accessoire vient en appui axial contre le boîtier. Il s'ensuit qu'avec un tel appareil, lorsque l'accessoire est immobilisé par le verrou, il résulte un jeu entre le corps de l'accessoire et le corps du boîtier qui permet l'entrée en vibration du corps de l'accessoire par rapport au boîtier lors du fonctionnement de l'appareil. Or, de telles vibrations du corps de l'accessoire sur le boîtier génèrent des bruits parasites qui sont désagréables pour l'utilisateur et donnent une impression négative sur la qualité de l'appareil.

L'invention qui suit vise à pallier ces inconvénients.

Le but de l'invention est atteint par un appareil électroménager de préparation culinaire selon la revendication 1.

Une telle caractéristique présente l'avantage d'éliminer l'apparition des vibrations parasites de l'accessoire par rapport au boîtier.

Selon une autre caractéristique de l'invention, l'élément à dentures est mobile par rapport au manchon d'assemblage le supportant, l'élément à dentures étant ramené élastiquement dans une position de verrouillage dans laquelle les dents de l'élément à dentures font saillie par rapport au manchon d'assemblage

Une telle caractéristique permet de réaliser un dispositif de verrouillage efficace n'engendrant pas d'effort de frottement important entre l'élément à dentures et les nervures de blocage lors du vissage de l'accessoire.

Selon une autre caractéristique de l'invention, l'élément à dentures est solidaire d'un bouton de déverrouillage permettant d'effacer les dents de l'élément à dentures à l'intérieur du manchon d'assemblage le supportant.

Une telle caractéristique permet, par une solution simple, de démonter l'accessoire du boîtier sans effort.

Selon une autre caractéristique de l'invention, le bouton de déverrouillage et l'élément à dentures sont portés par une même pièce, cette dernière intégrant un élément de rappel élastique de l'élément à dentures.

Une telle caractéristique permet de simplifier la réalisation du dispositif de verrouillage en limitant le nombre de pièces.

Selon une autre caractéristique de l'invention, la répartition angulaire des nervures de blocage et l'étendue angulaire de l'élément à dentures sont telles qu'au moins une nervure de blocage est en permanence en regard de l'élément à dentures lorsque l'accessoire est accouplé au boîtier.

Une telle caractéristique permet d'assurer une immobilisation de l'accessoire sur le boîtier quelle que soit la position de l'accessoire.

Selon une autre caractéristique de l'invention, les filetages des manchons d'assemblage sont constitués par des filets quart de tour qui permettent l'accouplement de l'accessoire sur le boîtier suivant quatre positions différentes, décalées l'une de l'autre de 90°.

Une telle caractéristique présente l'avantage d'offrir le choix dans la position d'assemblage de l'accessoire.

Selon encore une autre caractéristique de l'invention, le boîtier comporte un corps comprenant une zone de préhension manuelle de forme allongée renfermant le moteur et présente une extrémité longitudinale comportant le manchon d'assemblage, cette dernière comportant une ouverture en regard de laquelle est disposé un entraîneur rotatif entraîné par le moteur.

Selon encore une autre caractéristique de l'invention, l'élément à dentures est porté par le manchon d'assemblage du boîtier et les nervures sont portées par le manchon d'assemblage de l'accessoire.

Une telle caractéristique permet d'optimiser les coûts de fabrication des accessoires.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil électroménager selon un mode particulier de réalisation de l'invention lorsque l'accessoire batteur est amené en regard du boîtier pour son montage ;
- la figure 2 est une vue en perspective, partiellement arrachée, du boîtier de la figure 1 ;
- la figure 3 est une autre vue en perspective, partiellement arrachée, de la partie avant du boîtier de la figure 1 ;
- les figures 4 et 5 représentent deux vues en perspective de l'organe de verrouillage représenté seul ;
- les figures 6 et 7 illustrent deux exemples d'accouplement de l'accessoire sur le boîtier.

Seuls les éléments nécessaires à la compréhension de l'invention ont été représentés. Pour faciliter la lecture des dessins les mêmes éléments portent les mêmes références d'une figure à l'autre.

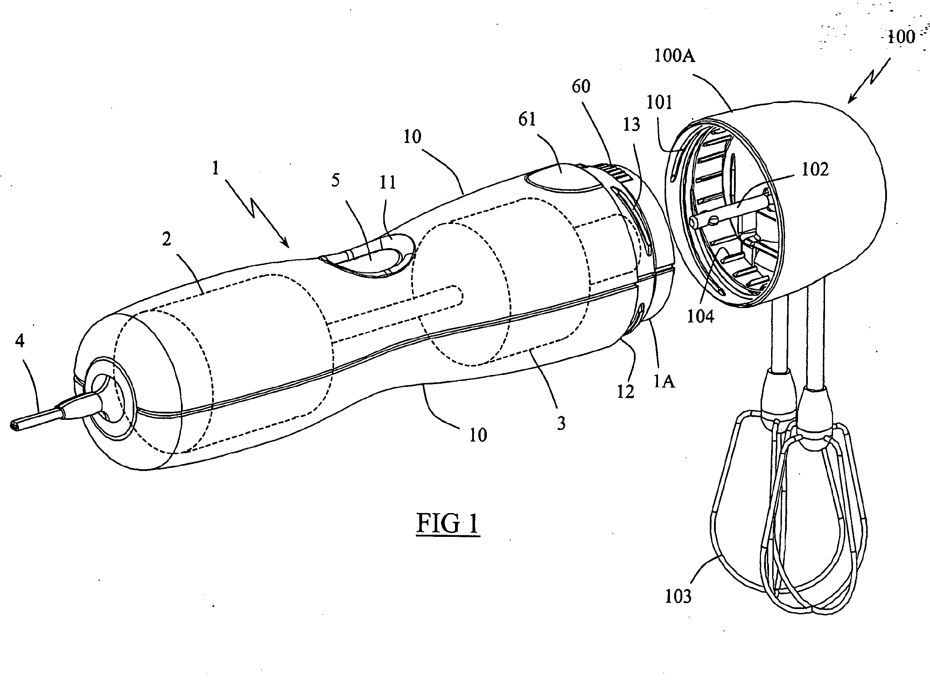

La figure 1 représente un appareil électroménager comportant un boîtier 1 de forme allongée dont une extrémité longitudinale est destinée à être accouplée à un accessoire, tel un accessoire batteur 100. Le boîtier 1 comporte un corps de section circulaire constitué par deux coquilles 10 en matière plastique assemblées l'une sur l'autre et comprend, dans la partie centrale du boîtier 1, une zone de préhension manuelle présentant une section restreinte.

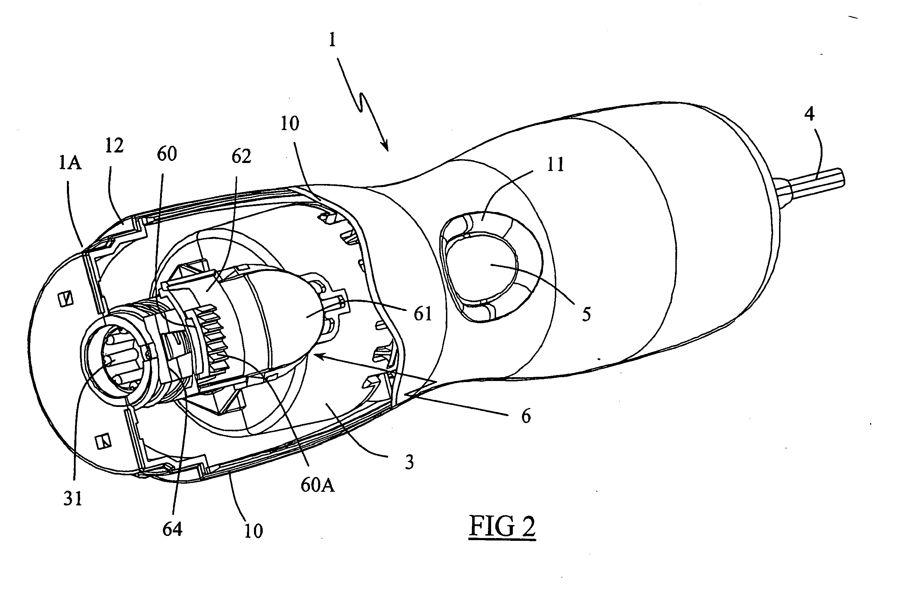

Conformément aux figures 1 et 2, le boîtier 1 renferme un moteur 2 relié à un réducteur 3 par un arbre de transmission, représentés en pointillés sur la figure 1, le réducteur 3 étant muni d'un entraîneur rotatif 31 à deux vitesses agencé en regard d'une ouverture pratiquée dans la cloison fermant l'extrémité du boîtier 1 destinée à être accouplée à l'accessoire. L'extrémité opposée du boîtier 1 comporte quant à elle une ouverture pour le passage d'un cordon d'alimentation électrique 4.

Le fonctionnement du moteur 2 est contrôlé par un bouton de commande 5 disposé au niveau de la partie centrale du boîtier 1, le corps du boîtier 1 comportant à cet endroit une empreinte 11 adaptée à la forme d'un pouce dont le fond est formé par la surface d'actionnement du bouton de commande 5.

L'extrémité du boîtier 1 destinée à être accouplée à l'accessoire batteur 100 est muni d'un manchon d'assemblage 1A présentant une section réduite par rapport à la zone de préhension du boîtier 1 de sorte qu'il résulte un épaulement 12 servant de butée axiale à l'accessoire 100 lors de son montage sur le boîtier 1. Le manchon d'assemblage 1A comporte quatre filets 13 quart de tour régulièrement répartis sur la périphérie du manchon d'assemblage 1A, ces filets 13 permettant l'accouplement par vissage de l'accessoire batteur 100 sur le boîtier 1 suivant quatre positions décalées l'une de l'autre de 90°.

Conformément à la figure 1, l'accessoire batteur 100 est muni d'un manchon d'assemblage 100A en matière plastique s'engageant autour du manchon d'assemblage 1A du boîtier 1 et dont la périphérie intérieure comporte des filets quart de tour 101 adaptés pour coopérer avec les filets 13 du boîtier 1. Le manchon d'assemblage 100A possède un diamètre extérieur adapté pour prolonger continûment le corps du boîtier 1 lorsque le bord du manchon 100A est en butée contre l'épaulement 12 du boîtier 1.

L'accessoire batteur 100 comporte également un arbre d'entrée 102 qui vient s'accoupler à l'entraîneur rotatif 31 du réducteur, cet arbre d'entrée 102 étant relié, par l'intermédiaire d'un train d'engrenages, à deux fouets 103 orientés parallèlement l'un à l'autre et transversalement à l'arbre 102.

Plus particulièrement selon l'invention, l'immobilisation de l'accessoire batteur 100 dans sa position finale est assuré par un organe de verrouillage 6 comprenant un élément à dentures 60 disposé au travers d'une ouverture du manchon d'assemblage 1A, l'élément à dentures 60 comportant des dents 60A longitudinales faisant élastiquement saillie à l'extérieur du corps du boîtier 1 de façon à coopérer avec des nervures de blocage 104 formées, tous les 15° environ, sur la périphérie intérieure du manchon d'assemblage 100A de l'accessoire batteur 100.

L'organe de verrouillage 6 comporte également un bouton de déverrouillage 61 disposé dans une ouverture du corps du boîtier 1, en bordure du manchon d'assemblage 1A. La partie avant du bouton de déverrouillage 61 est lié à l'élément à dentures 60 par un élément de liaison 62, le bouton de déverrouillage 61 permettant lorsqu'il est enfoncé, l'effacement des dents 60A à l'intérieur du corps du boîtier 1.

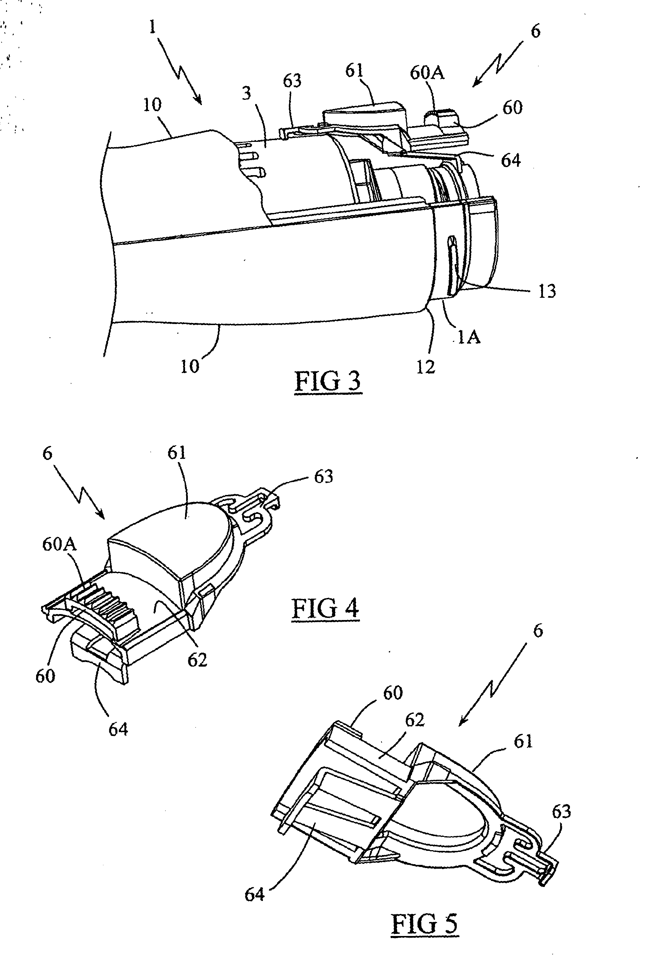

Conformément aux figures 3 et 5, l'organe de verrouillage 6 comporte également une languette d'appui 63 s'étendant depuis la partie arrière du bouton de déverrouillage 61 et dont l'extrémité recourbée prend appui sur le corps du réducteur 3 et sert de point de pivotement à l'organe de verrouillage 6.

Le rappel élastique de l'élément à dentures 60 en position de verrouillage est assuré par une languette élastique 64 intégrée à l'organe de verrouillage 6. La languette élastique 64 s'étend obliquement sous l'élément de liaison 62 et possède une extrémité prenant appui sur le corps du réducteur 3, sous l'élément à dentures 60, le réducteur 3 présentant à cet endroit un diamètre réduit.

Comme on peut le voir plus précisément sur les figures 2 ou 4, l'élément à dentures 60 s'étend transversalement suivant une forme générale en arc de cercle qui épouse la courbure du corps du boîtier 1 et préférentiellement sur une ouverture angulaire supérieure à 15° de sorte qu'au moins deux nervures de blocage 104 soit en permanence engagées sur l'élément à dentures 60 lorsque l'accessoire 100 est accouplé au boîtier 1.

De manière préférentielle, les flancs des dents 60A de l'élément à dentures 60 et des nervures de blocage 104 venant au contact l'un de l'autre dans le sens du dévissage s'étendent sensiblement radialement à l'axe de vissage de manière à empêcher le dévissage de l'accessoire 100. A l'opposé, les flancs des dents 60A de l'élément à dentures 60 et des nervures de blocage 104 venant au contact l'un de l'autre lors du vissage de l'accessoire sont inclinées de façon à générer un effort radial conduisant à l'effacement automatique de l'élément 60 à dentures à l'intérieur du corps du boîtier lors du vissage de l'accessoire 100.

Avantageusement, la répartition des dents 60A sur l'élément à dentures 60 est telle qu'elle permet l'engagement d'une nervure de blocage 104 entre deux dents 60A tous les 5° environ.

Le fonctionnement du dispositif de verrouillage de l'accessoire sur le boîtier va maintenant être décrit.

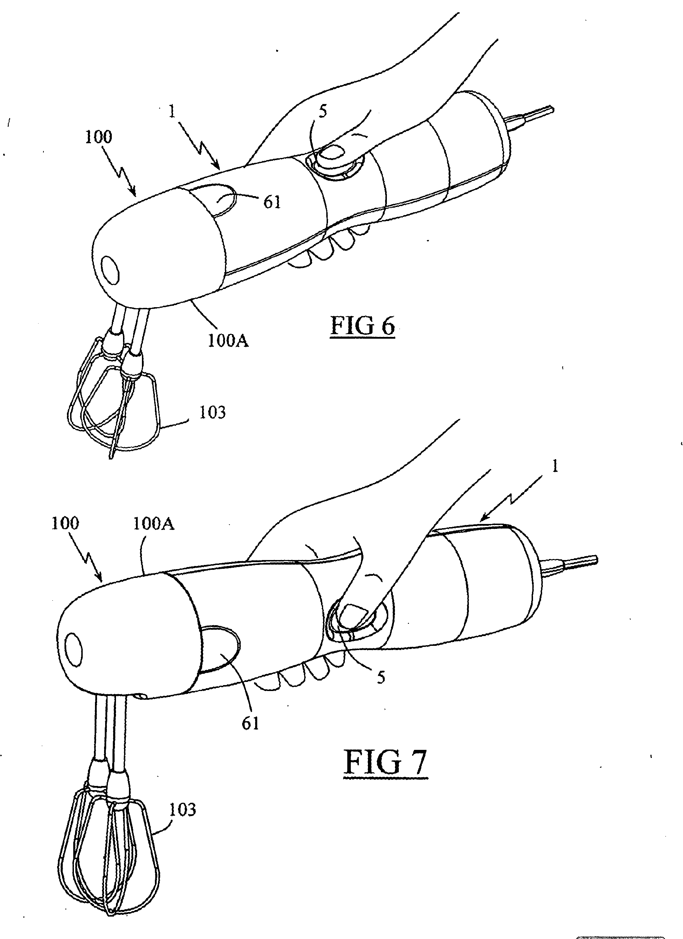

Lorsque l'utilisateur souhaite utiliser l'appareil électroménager avec l'accessoire batteur 100, il assemble ce dernier par vissage sur le boîtier 1. Lors de cette opération d'assemblage, l'utilisateur a le choix entre 4 positions de vissage de l'accessoire 100, décalées l'une de l'autre de 90°, ce qui lui permet de choisir l'orientation du bouton de commande 5 qui lui convient le mieux. Ainsi, les figures 6 et 7 illustrent respectivement, à titre d'exemples, l'utilisation du boîtier avec le bouton de commande orienté vers le haut et sur le côté.

Lors de l'opération de vissage de l'accessoire 100 sur le boîtier 1, les dents 60A de l'élément 60 viennent s'engager sur les nervures 104 du manchon d'assemblage 100A, et l'élément à dentures 60 s'efface automatiquement dans le corps du boîtier 1, par compression de la languette élastique 64, sous l'effort radial généré par l'inclinaison des flans des dents 60A et des nervures 104 qui sont mutuellement en contact dans le sens du vissage. Lorsque le bord du manchon d'assemblage 100A de l'accessoire arrive en butée contre l'épaulement 12 du boîtier 1, le couple de vissage appliqué par l'utilisateur génère un effort axial de compression de l'accessoire batteur 100 sur le corps du boîtier 1 qui provoque une déformation élastique imperceptible des manchons d'assemblage 1A,100A. La répartition serrée des dents 60A de l'élément à denture 60 permet alors de bloquer l'accessoire 100 dans la position finale de vissage à 5 degrés près, c'est à dire dans une position où le manchon d'assemblage 100A de l'accessoire 100 est appliquée sous contrainte contre le boîtier 1.

Un tel dispositif de verrouillage présente donc l'avantage de permettre l'immobilisation de l'accessoire sur le boîtier dans une position où le corps de l'accessoire est en appui axial contre le corps du boîtier, ce qui permet de réduire considérablement les risques d'entrée en vibration de l'accessoire sur le boîtier. Un tel dispositif présente de plus l'avantage d'être indépendant des tolérances de fabrication ou de l'usure des filetages.

Bien entendu, la répartition angulaire des dents sur l'élément à dentures sera préférentiellement adaptée à la valeur du pas de vis des filets quart de tour utilisés. Ainsi, cette répartition sera telle que la finesse angulaire du blocage soit inférieure à l'angle de rotation de l'accessoire permis par la déformation élastique des matériaux lorsque le corps de l'accessoire arrive en appui contre le boîtier et qu'un couple de serrage usuel est appliqué sur l'accessoire. De même, le nombre de nervures sur le corps de l'accessoire et l'étendue angulaire de l'élément à dentures pourront être modifiés de manière à faire varier le nombre de nervures de blocage engagées en permanence sur l'élément à dentures lorsque l'accessoire est accouplé au boîtier afin d'assurer un couple de blocage minimum prédéterminé.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel que défini dans les revendications.

Ainsi, l'appareil selon l'invention pourra être utilisé avec un autre type d'accessoire, tel un pied de mixage.

Ainsi, dans une variante de réalisation non représentée, l'organe de verrouillage pourra être porté par le manchon d'assemblage appartenant à l'accessoire et les nervures de blocage seront alors portées par le manchon d'assemblage appartenant au boîtier de l'appareil.

## Revendications

1. Appareil électroménager de préparation culinaire comportant un accessoire (100), tel un accessoire batteur, accouplé de manière amovible sur un boîtier (1) intégrant un moteur d'entraînement (2), ledit boîtier (1) et ledit accessoire (100) comportant chacun un manchon d'assemblage (1A, 100A) muni d'un filetage (13,101) permettant l'accouplement par vissage de l'accessoire (100) sur le boîtier (1), **caractérisé en ce qu'**il comporte un dispositif de verrouillage comportant un élément à dentures (60) avec une répartition serrée de dents, porté par l'un des manchons d'assemblage (1A, 100A), l'une au moins des dents dudit élément à dentures (60) coopérant avec au moins une nervure de blocage (104) portée par l'autre manchon d'assemblage (100A, 1A) pour immobiliser l'accessoire (100) sur le boîtier (1) dans une position où l'accessoire (100) est en appui axial contre le boîtier (1).

2. Appareil électroménager selon la revendication 1, **caractérisé en ce que** l'élément à dentures (60) est mobile par rapport au manchon d'assemblage (1A, 100A) le supportant, ledit élément à dentures (60) étant ramené élastiquement dans une position de verrouillage dans laquelle les dents de l'élément (60) font saillie par rapport audit manchon d'assemblage.

3. Appareil électroménager selon la revendication précédente, caractérisé en ce l'élément à dentures (60) est solidaire d'un bouton de déverrouillage (61) permettant d'effacer les dents de l'élément à dentures (60) à l'intérieur du manchon d'assemblage (1A, 100A) le supportant.

4. Appareil électroménager selon la revendication 3, **caractérisé en ce que** le bouton de déverrouillage (61) et l'élément à dentures (60) sont portés par une même pièce (6), ladite pièce (6) intégrant un élément de rappel élastique (64) de l'élément à dentures (60).

5. Appareil électroménager selon l'une quelconque des revendications 1 à 4, **caractérisé en ce que** la répartition angulaire des nervures de blocage (104) et l'étendue angulaire de l'élément à dentures (60) sont telles qu'au moins une nervure (104) est en permanence en regard de l'élément à dentures (60) lorsque l'accessoire (100) est accouplé au boîtier (1).

6. Appareil électroménager selon l'une quelconque des revendications 1 à 5, **caractérisé en ce que** les filetages (13,101) des manchons d'assemblage (1A, 100A) sont constitués par des filets quart de tour qui permettent l'accouplement de l'accessoire (100) sur le boîtier (1) suivant quatre positions différentes, décalées l'une de l'autre de 90°.

7. Appareil électroménager selon l'une quelconque des revendications 1 à 6, **caractérisé en ce que** le boîtier (1) comporte un corps comprenant une zone de préhension manuelle de forme allongée renfermant ledit moteur (2) et présente une extrémité longitudinale comportant le manchon d'assemblage (1A), ladite extrémité longitudinale munie du manchon d'assemblage (1A) comportant une ouverture en regard de laquelle est disposé un entraîneur rotatif entraîné par ledit moteur (2).

8. Appareil électroménager selon l'une quelconque des revendications 1 à 7, **caractérisé en ce que** l'élément à dentures (60) est porté par le manchon d'assemblage (1A) du boîtier (1) et **en ce que** les nervures (104) sont portées par le manchon d'assemblage (100A) de l'accessoire (100).

## Claims

1. A household electrical appliance for preparing food and that comprises an accessory (100), such as a beater accessory, coupled removably to a housing (1) containing a drive motor (2), said housing (1) and said accessory (100) each including an assembly sleeve (1A, 100A) that is provided with a thread (13, 101) enabling the accessory (100) to be coupled to the housing (1) by screw-coupling, said household electrical appliance being **characterized in that** it includes a locking device including a toothed element (60) whose teeth are distributed close together and that is carried by one of the assembly sleeves (1 A, 100A), at least one of the teeth of said toothed element (60) cooperating with at least one locking rib (104) that is carried by the other assembly sleeve (100A, 1A) so as to hold the accessory (100) stationary on the housing (1) in a position in which the accessory (100) is in axial abutment against the housing (1).

2. A household electrical appliance according to claim 1, **characterized in that** the toothed element (60) is mounted to move relative to the assembly sleeve (1A, 100A) that supports it, said toothed element (60) being urged resiliently back into a locking position in which the teeth of the element (60) project relative to said assembly sleeve.

3. A household electrical appliance according to the preceding claim, **characterized in that** the toothed element (60) is secured to or integral with an unlocking button (61) enabling the teeth of the toothed element (60) to be retracted into the assembly sleeve (1A, 100A) that supports it.

4. A household electrical appliance according to claim 3, **characterized in that** the unlocking button (61) and the toothed element (60) are carried by the same part (6), said part (6) including a resilient return element (64) for resiliently returning the toothed element (60).

5. A household electrical appliance according to any one of claims 1 to 4, **characterized in that** the distribution angle at which the locking ribs (104) are spaced apart and the angle through which the toothed element (60) extends are such that at least one rib (104) is continuously in register with the toothed element (60) when the accessory (100) is coupled to the housing (1).

6. A household electrical appliance according to any one of claims 1 to 5, **characterized in that** the threads (13, 101) of the assembly sleeves (1A, 100A) are constituted by quarter-turn thread starts that enable the accessory (100) to be coupled to the housing (1) in four different positions that are offset from one another by 90°.

7. A household electrical appliance according to any one of claims 1 to 6, **characterized in that** the housing (1) comprises an elongate body enclosing said motor (2) and having a graspable zone for being held in the hand, and has one of its longitudinal ends provided with the assembly sleeve (1A), said longitudinal end that is provided with the assembly sleeve (1A) being provided with an opening disposed facing a rotary chuck that is driven by said motor (2).

8. A household electrical appliance according to any one of claims 1 to 7, **characterized in that** the toothed element (60) is carried by the assembly sleeve (1A) of the housing (1), and **in that** the ribs (104) are carried by the assembly sleeve (100A) of the accessory (100).

## Patentansprüche

1. Elektrohaushaltsgerät zur Nahrungsmittelzubereitung, mit einem Zubehörteil (100), wie etwa einem Rührzubehörteil, das abnehmbar an ein Gehäuse (1) angekoppelt ist, in welchem ein Antriebsmotor (2) aufgenommen ist, wobei das Gehäuse (1) und das Zubehörteil (100) jeweils eine Verbindungshülse (1A, 100A) aufweisen, die mit einem Gewinde (13, 101) versehen ist, das das Ankoppeln des Zubehörteils (100) an das Gehäuse (1) durch Zusammenschrauben ermöglicht, **dadurch gekennzeichnet, dass** es eine Verriegelungsvorrichtung aufweist, die ein von einer der Verbindungshülsen (1A, 100A) getragenes verzahntes Element (60) mit dicht verteilten Zähnen aufweist, wobei mindestens einer der Zähne des verzahnten Elements (60) mit mindestens einer von der anderen Verbindungshülse (100A, 1A) getragenen Blockierungsrippe (104) zusammenwirkt, um das Zubehörteil (100) in einer Position am Gehäuse (1) zu blockieren, in der das Zubehörteil (100) axial am Gehäuse (1) anliegt.

2. Elektrohaushaltsgerät nach Anspruch 1, **dadurch gekennzeichnet, dass** das verzahnte Element (60) bezüglich der Verbindungshülse (1 A, 100A), von der es getragen ist, beweglich ist, wobei das verzahnte Element (60) elastisch in eine Verriegelungsposition zurückgestellt wird, in der die Zähne des Elements (60) bezüglich der Verbindungshülse hervorstehen.

3. Elektrohaushaltsgerät nach dem vorhergehenden Anspruch, **dadurch gekennzeichnet, dass** das verzahnte Element (60) mit einem Entriegelungsknopf (61) fest verbunden ist, der die Zähne des verzahnten Elements (60) in das Innere der Verbindungshülse (1A, 100A), von der es getragen ist, einziehen kann.

4. Elektrohaushaltsgerät nach Anspruch 3, **dadurch gekennzeichnet, dass** der Entriegelungsknopf (61) und das verzahnte Element (60) von ein und demselben Teil (6) getragen sind, wobei das Teil (6) ein Element (64) zur elastischen Rückstellung des verzahnten Elements (60) aufweist.

5. Elektrohaushaltsgerät nach einem der Ansprüche 1 bis 4, **dadurch gekennzeichnet, dass** die Winkelverteilung der Blockierungsrippen (104) und die Winkelausdehnung des verzahnten Elements (60) so vorgesehen sind, dass mindestens eine Rippe (104) permanent dem verzahnten Element (60) gegenüberliegt, wenn das Zubehörteil (100) an das Gehäuse (1) angekoppelt ist.

6. Elektrohaushaltsgerät nach einem der Ansprüche 1 bis 5, **dadurch gekennzeichnet, dass** die Gewinde (13, 101) der Verbindungshülsen (1 A, 100A) durch Vierteldrehungsgewindegänge gebildet sind, die das Ankoppeln des Zubehörteils (100) an das Gehäuse (1) in vier verschiedenen, um 90° voneinander versetzten Positionen ermöglichen.

7. Elektrohaushaltsgerät nach einem der Ansprüche 1 bis 6, **dadurch gekennzeichnet, dass** das Gehäuse (1) einen Körper mit einem länglichen Bereich zum manuellen Ergreifen aufweist, der den Motor (2) umschließt, und ein Längsende besitzt, das die Verbindungshülse (1A) aufweist, wobei das mit der Verbindungshülse (1A) versehene Längsende eine Öffnung aufweist, der ein Drehantrieb gegenüberliegt, welcher von dem Motor (2) angetrieben wird.

8. Elektrohaushaltsgerät nach einem der Ansprüche 1 bis 7, **dadurch gekennzeichnet, dass** das verzahnte Element (60) von der Verbindungshülse (1A) des Gehäuses (1) getragen ist und die Rippen (104) von der Verbindungshülse (100A) des Zubehörteils (100) getragen sind.
